# EUROPEAN PATENT SPECIFICATION

(11) **EP 2 004 762 B1**
(45) Date of publication and mention of the grant of the patent: **05.08.2015**
(21) Application number: 07723563.8
(22) Date of filing: 23.03.2007
(51) Int. Cl.: C09D 7/00, C09D 5/04, C09D 13/00, C04B 26/02, C04B 26/06, C08K 3/34, C08K 5/17

(54) **SOLID PAINT COMPOSITIONS COMPRISING A CHELATING THICKENER AND A CLAY THICKENER**
FESTE ANSTRICHMITTEL MIT EINEM CHELATBILDENDEN VERDICKER UND EINEM TONVERDICKER
COMPOSITIONS AMELIOREES DE PEINTURE SOLIDE

(30) Priority: 31.03.2006 GB 0606468; 31.03.2006 GB 0606467
(43) Date of publication of application: 24.12.2008
(73) Proprietor: Akzo Nobel Coatings International B.V., 6824 BM Arnhem (NL)
(72) Inventor: WREN, Gary, Thomas, Middlesex TW15 1AD (GB)
(74) Representative: Akzo Nobel IP Department
(86) International application number: PCT/EP2007/002615
(87) International publication number: WO 2007/112870

(56) References cited:
- EP-A- 0 144 135
- WO-A-94/11207
- WO-A-97/25156
- US-A- 3 280 050

## Description

This invention relates to dimensionally stable coating compositions, in particular architectural paint compositions for structures such as buildings; and a process for making said solid paint and a process of painting.

Applying coatings such as paint and varnish to any substrate generates mess. This is especially so when painting large areas such as walls, ceilings or floors, for example in the home or in public buildings. The simple act of applying the paint to a surface by brush or roller produces fine droplets or spatter which can fall on unprotected surfaces, which subsequently have to be cleaned. This is irritating for the amateur painter and time-consuming and thus costly for the professional. The act of cleaning may itself cause further damage. In addition, the painting tools must be cleaned when the work is complete adding yet more time and effort to the job.

Because of this preparation time and clean-up time, there is a natural resistance to painting, especially by the amateur. There is a need therefore to provide coatings in an easy to use form that cause reduced mess and require minimum cleaning of tools.

Attempts have been made in the past to address some of these problems. For example European Patent EP144135 discloses a lidded container containing an aqueous paint composition, the paint being sufficiently structured or gelled, using titanium or zirconium chelates, that it may be applied direct to a roller without the need to first transfer it to a separate tray. Such paint, however, cannot be formed into a body or block which is sufficiently hard and strong enough to enable it to be applied directly to a substrate without the use of an application tool such a brush or a roller. The hardness of such paints is found to be about 35 g as measured by the method described hereinbelow. Similarly, Canadian Patent CA 889886 discloses an aqueous paint composition comprising a combination of microbial polysaccharide and a Group IVB metal chelate as a gelling system. The resulting paint is sufficiently structured to be dimensionally stable. However, the structure is not strong enough to enable the paint to be applied directly to the substrate. Application is by conventional means such as roller. Furthermore, the gelling system is water soluble, resulting in inadequate water resistance of the final dried paint. United States patent US 3994848 discloses a solventborne paint composition comprising ionic crosslinking agent and which is formable into a dimensionally stable bar. The bar may be applied directly to a substrate such as a wall. However, the high volatile organic content (VOC) of the composition makes it environmentally unfriendly and, in any case, the odours released, especially in a poorly ventilated space, are unpleasant and can produce adverse health effects EP0144135 discloses a solid paint comprising a) a polymer latex dispersion, b) a thickener and c) 0.1-10 % wt. of a structuring agent selected from natural and synthetic clays, titanium chelates, zirconium chelates, and mixtures such as a combination of a natural clay with a zirconium chelate. The solid paint will retain its shape for a significant period of time (for example at least 2 days) when, after a period of 4 weeks from preparation, a portion of the paint is removed from the container and supported on a horizontal surface.

WO9411207 discloses a body of paint of the solid emulsion type, comprises an application support member, in which the paint (2) is intrinsically substantially form-stable on the support member whereby, to transmit application pressures from the member to a contact zone between the external surface of the paint body and a substrate, the external surface being rendered flowable at the contact zone.

We have now produced improved paint compositions which overcome the deficiencies of the prior art paints and which have excellent overall properties.

The use of the term paint in this specification is intended to include all protective and decorative paint compositions for use in buildings and gardens especially structures such as houses, apartments, hospitals, schools and offices and includes pigmented wall, ceiling and floor paints, clear varnishes, woodstains and metal care paints.

Accordingly, in a first aspect of the invention there is provided an 1 aqueous paint composition capable of being formed into a self-supporting, dimensionally stable paint body comprising by weight of the total composition i) from 1 to 6% chelating thickener ii) from 2 to 8% clay thickener and iii) from 0 to 30% clay extender 2 wherein the body has a hardness, following overnight hardening in a 250cm 3 container, of from 50 to 750g when measured at 23°C +/- 2°C using a Leatherhead Food research Association texture analyser, obtainable from Brookfield Viscometers, equipped with a 4mm diameter stainless steel probe travelling at 1 mm s-1 for a total travel of 10mm.

In a second aspect of the invention there is provided a self supporting, dimensionally stable aqueous paint composition as hereinbefore described when formed into a self supporting paint body having a hardness of at least 50g and which can be applied directly to a substrate by contacting an exposed surface of the body onto the substrate and which under the application of sufficient shear stress and/or shear rate in the contact zone between the composition and the substrate renders the composition flowable.

Suitable examples of chelating thickener include thixotropic gelling agents such as alkanolamine titanate complexes, for example Vertec AT35, ammoniacal Vertec AT 23 and Vertec AT 33; all available from Johnson Matthey. In addition, zirconium based chelate thickeners are also suitable and include zirconium lactic acid complex, available as Rhodoline RH PN from Rhodia.

Preferably the chelating thickeners can form crosslinks with particulate material in the paint composition. More preferably, the crosslinks are of the hydrogen bond type. Even more preferably, the crosslinks break when the paint body is sheared, rendering the composition flowable.

The particulate material may be organic, for example a dispersion polymer, or inorganic, for example the clay thickener or the clay extender. More preferably, such particulate material contains moieties capable of forming crosslinks with the chelating thickener. Suitable such moieties include hydroxyl, carboxyl and amino groups.

Clay thickeners, at low concentrations in aqueous media, develop high viscosity at low shear rates of about 5 s⁻¹ at ambient temperatures of about 23 °C. By low concentrations is meant up to 10% by weight, preferably 6%. Preferably the viscosity developed is from 0.3 to 100 Pa.s, more preferably from 0.4 to 8.0 Pa.s, even more preferably from 0.5 to 7.0 Pa.s and yet more preferably from 0.6 to 6.0 Pa.s.

Suitable examples of clay thickeners include bentonite, which is mainly montmorillonite (Na, Ca)_{0.3} (Al, Mg)₂ Si₄O₁₀(OH)₂ .n(H₂O); Veegum and Vangel which are both smectite clays, which itself is (Na, Ca) Al₄ (Si, Al)₈O₂₀(OH)₄.2(H₂O); hectorite, which is a type of smectite, Na_{0.3}(Mg,Li)₃Si₄O(F,OH)_{2;} Pangel HV, a hydrated magnesium silicate and Laponite, a synthetic hectorite (hydrous sodium lithium magnesium silicate). Suitable examples of Laponite include RD, RDS, S482 and SL25. Most preferred is Laponite RDS as its small mean particle size of approximately 10 to 50 nanometers and its transparent nature means that high sheen levels are not adversely affected. Optionally, when the clay thickener is a synthetic hectorite it can contain up to 15% by weight of tetrasodium pyrophosphate.

Preferably, the composition contains some clay extender as this increases the hardness of the composition when formed into a paint body. By clay extender is meant clay that has little thickening effect at the low concentrations in aqueous media discussed above. Such clays are usually based on kaolinite, also known as kaolin the chemical composition of which is an aluminium silicate such as Al₂O₃SiO₂.2H₂O. A suitable such clay extender is China Clay Supreme, a hydrated aluminium silicate available from Imerys, or Polwhite C or Tec 820. The feature of such clay extenders is that they preferably do not have counter-ions. More preferably, it contains from 0.01 to 30% and most preferably from 5 to 20% clay extender.

Advantageously, the paint composition as described is formed into a paint body suitable for applying directly to a substrate by contacting an exposed surface of the body onto the substrate and which under the application of sufficient shear stress and/or shear rate in the contact zone between the composition and the substrate renders the composition flowable.

By paint body is meant the self-supporting, dimensionally stable paint composition described above when formed into any shape suitable for painting. Preferably the paint body is shaped as a block having at least one, preferably flat, exposed surface which is used to apply the paint directly to the substrate. Even more preferably, the paint body forms part of a painting assembly as described hereinbelow.

The paint body effectively behaves as a solid of very high viscosity at low shear stress. Unlike a true solid, however, when sufficient shear stress is put on it, it will flow and behave like a liquid, albeit a non-Newtonian one. The shear stress above which the paint starts to flow is the yield point.

In use, the shear stress exceeds the yield point in the region of the contact zone only, thereby converting the solid paint body into a liquid in this region, allowing the paint to be easily spread upon the substrate.

In a third aspect of the invention, the body is formed into a self-supporting dimensionally stable block of paint, optionally pigmented, carried on an application member forming a painting assembly. The paint is sufficiently structured that it may be applied directly to a wall by simply contacting the block of paint with the wall and wiping it across the area of the wall that is to be painted. The combined action of wiping and pressing against the substrate to be painted generates sufficient shear stress to exceed the yield point, liquefy and spread the paint. Thus no painting means, such as a brush or roller, is required. Because of this, there is no soiled implement to clean when painting is finished. An additional advantage is that if painting is interrupted, the paint block is simply sealed in a container ready for use at a later time.

By aqueous is meant that at least 50% of the total volatile content of the composition is water ensuring that the VOC is minimised. Preferably the VOC is from 0 to 20%, more preferably from 0 to 10%, even more preferably from 0 to 5% and most preferably it is 0%.

By self-supporting, dimensionally stable is meant that the composition is solid enough to retain the shape into which it has been formed without the need for a container to support it. Also, it must be able to substantially retain its dimensions during the painting or application process. In other words, when in the form of a paint block, for example, the paint should be able to withstand the forces imparted on it without breaking up, whilst allowing a film of liquid paint to flow on to the substrate during painting. Clearly some transient deformation of the paint body or block will occur, but not to the extent that interrupts or prevents painting.

Preferably, the paint composition should have a hardness as measured by the method and apparatus described hereinbelow of at least 50g. At hardness levels below this, the paint composition, whilst self-supporting, can be a little weak when applied to anything but a smooth substrate, for example a textured wall covering such as blown vinyl or anaglypta, causing portions of the paint body to fragment. More preferably, the hardness is from 50 to 750g, even more preferably from 100 to 600g, still more preferably from 70 to 450g, yet more preferably from 120 to 450g and most preferably from 80 to 300g.

Paint compositions according to the invention and formed into shaped bodies retain their shape over a wide temperature range and do not exhibit any tendency to lose their dimensional stability. In particular, they do not exhibit a melting temperature below 60 or 70°C, well within the normal temperatures that an architectural paint would be used.

The shear stress necessary to render the paint flowable should be sufficiently low that it may be applied by hand. More preferably, it should have a yield point of at least 1,500 Pa, more preferably greater than 2,000 Pa and most preferably from 2,000 to 20,000 Pa and most preferably from 2000 to 5000 Pa measured at 25°C.

Once the yield point is exceeded the paint behaves as a fluid. Preferably the high shear viscosity is from 0.05 to 0.5 Pa.s measured at 10,000 s⁻¹ and 25°C, more preferably less than 0.4 Pa.s and most preferably from 0.1 to 0.4 Pa.s. Too high a high shear viscosity results in the paint being difficult to apply and spread evenly on the substrate. The medium shear viscosity measured on a Rotothinner viscometer is preferably from 0.1 to 10 Pa.s. Below the lower viscosity limit the paint will tend to run, causing sags and drips, whilst above the upper limit the paint will feel sticky during application resulting in thick, uneven paint films that do not flow very well and that leave an uneven dried surface.

The self supporting, dimensional stability of the composition is provided by a combination of a chelating thickener and a clay thickener. When a high level of clay is used without the chelating thickener, the resulting paint body is not sufficiently dimensionally stable to survive the forces imposed on it during the painting process and it fragments and falls apart.

Conversely, when a high level of the chelate only is used the resulting paint body is too soft to be sufficiently dimensionally stable.

The level and type of clay thickener and chelate thickener are selected so that sufficient structure is generated to give the paint the solidity required to make it self-supporting whilst not causing the yield point to be so high that it becomes difficult to impart sufficient shear stress to make the paint flow, especially by hand.

It is thought that the structuring agent produces a three dimensional structure which is strong enough at rest or low shear stress to be of sufficiently high yield point to be self-supporting under gravity, but which in regions of high shear stress, such as found in the zone between the paint body and the surface being painted, breaks down rapidly so that the paint becomes fluid enough to be easily spread to form a film of wet coating preferably of about 10 to 70 microns, more preferably from 40 to 70 microns. However, the viscosity of the paint must not be so low that the paint sags forming unsightly runs.

The chelating thickener and the clay thickener can be added at any stage during the paint manufacturing process, although it is preferable that they are added during the let-down stage to avoid large increases in viscosity during the period when the paint is transported around a factory, especially if it is pumped through pipework.

Following addition of the thickeners, the paint remains in a substantially liquid state for a number of hours, usually 2 to 3. During this time the paint can be conveniently filled into appropriately shaped containers, moulds or dies so that the paint body has the desired shape. In order for the user to conveniently handle the body and generate sufficient shear evenly across the contact zone of the paint body and the substrate to be painted, it is advantageously attached to a base plate using attachment means. On one surface of the plate is attached an absorbent means such as a sponge, a felt type material or a reticulated, that is open cell, foam. Where the absorbent means is sponge, felt or reticulated foam, the attachment means may be adhesive, especially a hot melt adhesive. The base plate, with the attached absorbent means, is placed in the bottom of the mould and the liquid paint poured into the mould. Whilst liquid, some of the paint flows into the absorbent means which on solidification anchors the paint to the base plate. Preferably on the other side of the plate are attachment means for a handle to be connected. In this way, the user may paint a wall for example without directly holding the paint body.

The dimensional stability of the paint composition according to the invention also means that a paint block of two or more colours can be made. When the two colours are arranged as stripes in the block, stripes may be applied quickly and directly to the substrate using a single action rather than having to mask off and carefully paint using a paint brush or roller.

In a yet further aspect of the invention there is provided a paint block in a resealable container. This enables the painter to interrupt painting without the need for washing and drying a brush or roller.

In a still further aspect of the invention there is provided a process of painting using a paint composition according to the invention comprising contacting an exposed surface of the paint body onto a substrate to be coated and applying sufficient shear stress at the contact zone between the composition and the substrate such that the yield point is exceeded whereby the coating flows to leave a substantially uniform coating layer on the substrate.

The invention also provides a structure, part of a structure or article painted with a paint composition according to the invention.

Suitable film forming resins include addition polymers and condensation polymers. The term polymer is used herein to describe both homopolymers and copolymers.

Suitable examples of addition polymers can be derived from acrylic acid esters and methacrylic acid esters, amides, nitriles, vinyl monomers such as ethylene, EVA, styrene and its derivatives and vinyl esters such as vinyl acetate, vinyl versatate and di-alkyl maleate esters.

Using the nomenclature (meth)acrylate to represent both acrylate and methacrylate, suitable (meth)acrylic acid esters include the alkyl esters, preferably methyl (meth)acrylate, propyl (meth)acrylate, butyl (meth)acrylate, 2-ethyl hexyl (meth)acrylate and alkoxy poly(oxyethylene) (meth)acrylate. Small amounts of acrylic acid and/or methacrylic acid may also be used. Hydroxy functional monomers such as hydroxy ethyl (meth)acrylate and/or hydroxy isopropyl (meth)acrylate, may also be included. Preferably the addition polymer is derived from the esters of (meth)acrylic acid. More preferably the addition polymer is an acrylic polymer of minimum film forming temperature of from 0 to 30°C, more preferably from 1 to 10°C.

Suitable examples of condensation polymers include polyesters and polyurethanes and alkyd emulsion polymers. Urethane-acrylic hybrid polymers, where the urethane and acrylic addition polymer portion are closely associated may also be used.

Advantageously, the film forming resins can contain moieties capable of forming crosslinks with the chelating thickener. Suitable such moieties include hydroxyl, carboxyl and amino groups.

The glass transition temperature, or Tg of the addition polymer may be varied by copolymerising monomers of appropriate Tg. Similarly, by varying the amount and functionality of hard and soft coreactants the Tg of the condensation polymers may also be varied. In this way, polymers which are hard, soft or intermediate Tg can be made which can produce a range of desirable physical properties, such as hardness in the dried coating.

The film forming resin may be a solution polymer by which is meant that the polymer is dissolved in organic solvent or water; or a dispersion polymer where the polymer exists as particles dispersed in a liquid carrier medium. Such dispersions are often referred to as latexes.

Preferably the film forming resin is a dispersion polymer and more preferably the liquid carrier medium is substantially water. Such polymers are preferred since they can be conveniently made at high molecular weight and low viscosity resulting in dispersions, and therefore paints, at high solids. The weight average particle diameter of such latexes is preferably from 0.01 to 5 microns, more preferably from 0.5 to 3 microns and most preferably from 0.1 to 1 microns. Preferably they are made by emulsion polymerisation process.

The paint composition may also advantageously contain ingredients selected from the group consisting of pigments, fillers, extenders, solvents, plasticizers, flow additives, antifoams and antimicrobials.

Although the paint composition may be unpigmented, for example when a varnish or a clearcoat, generally the paint is pigmented to produce a chosen colour. Pigments are incorporated into the paint by the conventional methods of comminution in the presence of film forming resins or specifically designed pigment dispersants. Comminution of the pigment is most commonly achieved using high speed dispersers, ball mills, or attritors. Useful pigments include both the inorganic and organic type. Suitable examples of inorganic pigments include titanium dioxide. Suitable organic pigments include the azo and polycyclic pigments. Flake pigments, such as mica and pearls; the metallic pigments such as aluminium and bronze can also be used although they can generally be incorporated into the paint by simple stirring.

The invention also provides a use of a thickener system in an aqueous paint composition to provide a self-supporting dimensionally stable paint body comprising
i) from 1 to 6%, preferably from 2 to 5% chelating thickener
ii) from 2 to 8%, preferably from 3 to 5% clay thickener
iii) from 0 to 30%, preferably 5 to 20% clay extender. wherein the body has a hardness, following overnight hardening, of from 50 to 750g when measured at 23°C +/- 2°C using a texture analyser equipped with a 4mm diameter stainless steel probe travelling at 1mm s⁻¹ for a total of 10mm.

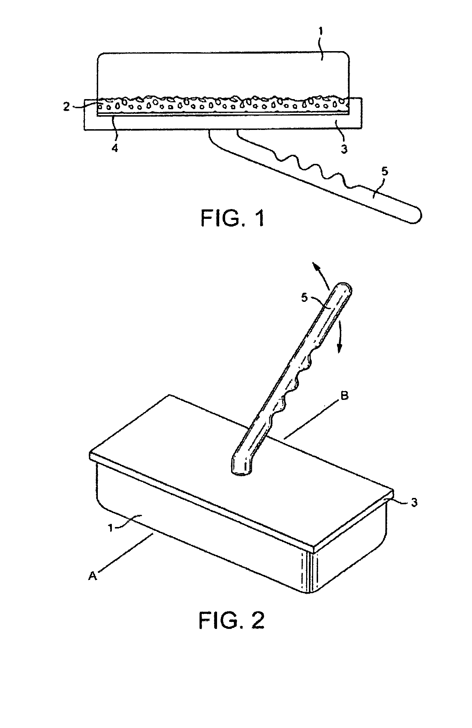

Figure 1 shows a cross sectional view, through the plane AB indicated on Figure 2, of a painting assembly of a paint composition of the invention formed into a block (1) and attached to a reticulated foam (2) which is attached to the polypropylene baseplate (3) by means of a layer of adhesive (4). A handle (5) is moveably attached to the baseplate. Figure 2 shows the same assembly in perspective view.

The ingredients used in the examples were obtained from the following suppliers
Laponite RDS was obtained from Rockwood Additives, Widnes, Cheshire, WA8 0JU, UK.
Texanol is an ester alcohol solvent and was obtained from Eastman Chemical Company.
Tamol™ 731 A is a dispersant and was obtained from Rohm & Haas.
Dispelair™ CF246 is an antifoam and was obtained from Blackburn Chemicals Ltd, Cunliffe Road, Whitebirk Industrial Estate, Lancashire, BB1 5SX, UK.
Microdol™ H200 is ground up dolomite (calcium magnesium carbonate) and was obtained from Omya, UK.
China Clay Supreme was obtained from Imerys UK Ltd.
Tioxide™ TR 92 was obtained from Huntsman Corporation Europe.
Revacryl™ A1 was obtained from Synthomer Ltd,Central Road, Templefields, Harlow, Essex.
Vertec AT 35 was obtained from Johnson Matthey

### Testing

The paints were tested according to the following methods

### Hardness

A Leatherhead Food Research Association texture analyser (obtained from Brookfield Viscometers, Harlow, Essex, CM19 5TJ, Great Britain) was used to measure the hardness of the structured paint at 23 °C +/-2°C.

The liquid paint sample is poured into a 250 ml container and allowed to harden overnight. The hardness is measured using a 4mm diameter stainless steel probe travelling at 1 mm s⁻¹ and 10 mm total travel.

### Yield point

The samples were tested at 25°C using a Carrimed CSL 100 controlled stress Rheometer (available from TA Instruments of Leatherhead UK) operating in flow mode. A 2cm diameter parallel plate geometry is used. The plates are coated with silicon carbide paper (P360 grade) to give rough surfaces, which prevent slippage of the sample during the test. A slice is cut from the paint bar and loaded between the plates with an initial gap setting of 3mm. The gap is then closed to 0.5 mm, at a slow rate to minimise damage to the gel structure. After a delay of 3 minutes for temperature equilibration the shear stress is gradually increased, in a continous logarithmic fashion. The scan is set for a duration of 2 minutes with limits of 10 Pa and 6000 Pa.

The yield point is obtained from a graph of log viscosity versus log shear stress. The viscosity is very high initially (> 10000 Pa.s) and declines gradually with increasing shear stress until the yield stress is approached. At this point the viscosity falls very sharply to values below 10 Pa.s. The yield stress value is determined graphically from the extrapolated onset of this rapid fall in shear stress.

### Cone and Plate viscosity

The liquid paint is decanted into a 250 ml lacquered can, allowed to solidify overnight. It is then place on a high speed disperser fitted with a turbine stirrer blade and sheared for about 5 minutes or until it becomes a bit-free, liquid. A sample of the liquid paint is immediately transferred to the ICI cone and plate high shear viscometer and allowed to equilibrate to 23°C. The viscosity is then measured at a shear rate of 10,000s⁻¹.

### Rotothinner viscosity

A sample of solid paint is liquefied using the same method as used for the high shear viscosity measurement above. The viscosity of the liquid paint is then measured using a Rotothinner viscometer at 23 °C operating at a shear rate of 300s⁻¹.

### Melting temperature

The melting temperature is estimated by measuring the storage Modulus as a function of temperature using a Carrimed CSL 100 controlled stress rheometer or similar, available from TA Instruments of Leatherhead, UK. The oscillatory shear mode is employed with a fixed frequency of 1 Hz and shear strain amplitude of 0.01. The sample is loaded as described in the method for yield stress above. To minimise evaporation of water the edge of the sample is protected by a layer of oil as well as by the standard Carrimed solvent trap. The temperature is cycled between 25°C and 70°C with a total cycle time of 20 minutes. A plot of the storage modulus against temperature shows that the storage modulus initially has a high value (> 10000Pa). It remains approximately constant as the temperature rises until the melting temperature is approached when it falls sharply to low values (< 100 Pa). On cooling the storage modulus remains low until the re-solidification temperature is approached, when the storage modulus rises sharply back to high values. The melting temperature and the re-solidification temperature are obtained from the extrapolated onset temperatures for the sharp fall and sharp rise in storage modulus respectively.

### Examples

The invention will now be illustrated by the following examples.

### Example 1

An aqueous matt white emulsion paint having the following parameters was prepared using the following method and the ingredients of Table 1.

### Method

Take a 3 litre metal dispersion vessel and add the tap water (1) Slowly add the Laponite RDS whilst stirring using a high speed disperser fitted with a 100 mm blade and operating at 1000rpm Disperse for 30 minutes until the solution becomes clear. Then add the solvents, dispersant and antifoam to the vessel while still mixing Then add the Microdol H200 extender, China Clay Supreme and the Tioxide TR92 titanium dioxide pigment to the vessel while still mixing. Finally add tap water (2) to the vessel, increase the speed of dispersion to 2000 rpm and disperse for approx 20 mins

### Let Down Stage

Take a 2.5 litre can and add Rocima V189 biocide, Revacryl 1A copolymer emulsion, Dispelair CF246 antifoam and the ammonia Place onto a stirrer and using a 100 mm flat stirrer blade, stir the let down mixture at about 200 rpm for 5 mins.
Add the millbase (72.975 wt%) into the latex mixture whilst stirring
Add the tap water (3) and chelating thickener to the paint Increase stirring speed to approx 500 rpm and stir for further 10 mins.
non vol 58.6%
PVC 55.3%

**Table 1**

| Millbase | |
|---|---|
| | wt% |
| Tap water (1) | 19.025 |
| Laponite RDS | 3.500 |
| Benzyl alcohol | 0.800 |
| Texanol | 2.000 |
| Tamol 731 A (pigment dispersant) | 2.000 |
| Dispelair CF 246 (antifoam) | 0.150 |
| Microdol H200 (Dolomite extender) | 13.000 |
| China Clay Supreme (clay extender) | 14.000 |
| Tioxide TR92 (TiO₂ pigment) | 15.500 |
| Tap water (2) | 3.000 |
| | |

| Let down | |
|---|---|
| Rocima V189 (biocide) | 0.200 |
| Tap water (3) | 5.167 |
| Revacryl 1A (binder dispersion) | 19.658 |
| Dispelair CF 246 | 0.150 |
| Ammonia 910 | 0.030 |
| Vertec AT 35 (chelate thickener) (85wt% solids) | 2.000 |

The liquid paint is poured into sealable block shaped moulds of approximately 15cm x 10cm x 3cm and allowed to solidify overnight. At the base of each mould is a removable base plate, one side of which is covered with an absorbent material, in this case a sponge. When the liquid paint is poured into the mould, some of it flows into the sponge. After a few hours the paint starts to solidify into a dimensionally stable block of paint attached to the plate via the sponge. The plate is arranged to have attachment means on the face opposite the paint to which a handle may be attached to enable the paint to be applied to a wall for instance.

The block of paint was removed from the mould and a handle was attached to the base plate. The block of paint was dimensionally stable.
Yield point
HSV was measured Pa.s

When the exposed surface of the block was wiped across a plasterboard substrate previously painted with blue Dulux™ vinyl matt the coating composition flowed and left a coating of approximately 50 microns thereon. No paint spatter or sags were observed. The paint block remained intact and dimensionally stable. Users found the paint in this form to be conveniently quick and easy to apply.

The mechanical and water resistance properties of the dried coating were evaluated and found to be acceptable.

### Examples 2 to 16

The procedure and ingredients of example 1 were used except that the level of the clay thickener, Laponite RDS, the chelate thickener, Vertec AT35 and one of the extenders, China Clay Supreme were systematically varied to determine their effect.

Table 2 indicates how the formulations varied

**Table 2**

| | Laponite RDS wt % | China Clay Supreme wt % | Vertec AT35 wt % | Hardness g | | |
|---|---|---|---|---|---|---|
| | | | | Overnight | 1 week at 25°C | 1 week at 40°C |
| 2 | 3 | 10 | 2 | 44 | 65 | 91 |
| 3 | 3 | 10 | 4 | 37 | 62 | 108 |
| 4 | 3 | 20 | 2 | 59 | 100 | 136 |
| 5 | 3 | 20 | 4 | 59 | 104 | 155 |
| 6 | 4 | 10 | 2 | 81 | 111 | 199 |
| 7 | 4 | 10 | 4 | 85 | 134 | 280 |
| 8 | 4 | 20 | 2 | 81 | 132 | 214 |
| 9 | 4 | 20 | 4 | 101 | 156 | 240 |
| 10 | 3 | 15 | 3 | 55 | 86 | 131 |
| 11 | 4 | 15 | 3 | 81 | 131 | 225 |
| 12 | 5 | 10 | 3 | 82 | 117 | 209 |
| 13 | 5 | 20 | 3 | 115 | 168 | 277 |
| 14 | 5 | 15 | 2 | 107 | 147 | 261 |
| 15 | 5 | 15 | 4 | 112 | 202 | 300 |
| 16 | 5 | 15 | 3 | 115 | 181 | 300 |

In order to accommodate the variations in these ingredients the following adjustments were made to the formulation:
i) the total amount of Microdol 200 and China Clay Supreme in the formulation, by weight was 27%
ii) the variation of the total amount of Laponite RDS and Vertec AT35 was accommodated by adjusting the water content.

### Examples 17 to 22

A further set of examples was made according to Example 1 but with Laponite RDS and Vertec AT35 replaced, on a weight basis, with alternative clay thickeners and chelate thickeners as indicated in Table 3.

**Table 3**

| | Clay Thickener | Chelate Thickener | Hardness g | |
|---|---|---|---|---|
| | | | 1 week at 25°C | 1 week at 40°C |
| 17 | Bentone EW | Vertec AT 35 | 78 | 81 |
| 18 | Optigel SH | Vertec AT 35 | 71 | 74 |
| 19 | Veegum T | Vertec AT 35 | 76 | 79 |
| 20 | Laponite RDS | Vertec AT 23 | 127 | 148 |
| 21 | Laponite RDS | Rhodoline Rh Pn | 117 | 162 |

All the compositions were self-supporting. Examples 18 and 20 had the best application characteristics being easy to apply with good spreading rates of about 15 m ²/l.

The hardness of a paint made according to EP 0144135 was measured as 34g.

## Claims

1. An aqueous paint composition capable of being formed into a self-supporting, dimensionally stable paint body comprising by weight of the total composition
i) from 1 to 6% chelating thickener
ii) from 2 to 8% clay thickener and
iii) from 0 to 30% clay extender
wherein the body has a hardness, following overnight hardening in a 250cm³ container, of from 50 to 750g when measured at 23°C +/- 2°C using a Leatherhead Food research Association texture analyser, obtainable from Brookfield Viscometers, equipped with a 4mm diameter stainless steel probe travelling at 1mm s⁻¹ for a total travel of 10mm.

2. An aqueous paint composition according to claim 1 wherein the paint body has a melting temperature of at least 60°C.

3. A paint composition according to claim 1 or claim 2 when formed into a self supporting dimensionally stable paint body having a hardness of at least 50g and which can be applied directly to a substrate by contacting an exposed surface of the body onto the substrate and which under the application of sufficient shear stress and/or shear rate in the contact zone between the composition and the substrate renders the composition flowable.

4. A paint composition according to any one of the previous claims and further comprising film forming polymer.

5. A paint composition according to any one of the preceding claims and further comprising from 0.01 to 30% clay extender.

6. A paint composition according to any one of the preceding claims where the chelating thickener comprises from 2 to 5% of the total composition.

7. A paint composition according to any one of the preceding claims where the clay thickener comprises from 3 to 5% of the total composition.

8. A paint composition according to any one of the preceding claims where the clay extender comprises from 5 to 20% of the total composition.

9. A paint composition according to any one of the preceding claims where the chelating thickener is an alkanolamine titanate complex or a zirconium lactic acid complex.

10. A paint composition according to any one of the preceding claims where the clay thickener is a synthetic hectorite.

11. A paint composition according to any one of the preceding claims having a yield point of at least 1500 Pa measured at 25 °C.

12. A paint composition according to any one of the preceding claims having a high shear viscosity of from 0.05 to 0.5 Pa.s measured at 10,000 s⁻¹ and 25°C.

13. A paint composition according to any one of the preceding claims also containing ingredients selected from the group consisting of pigments, fillers, waxes, extenders, rheological modifiers, dispersants, flow aids and biocides.

14. A process of painting using a paint composition according to any one of the previous claims comprising contacting an exposed surface of the paint body onto a substrate to be coated and applying sufficient shear stress in the contact zone between the composition and the substrate such that the yield point of the paint is exceeded whereby the coating flows to leave a substantially uniform coating layer on the substrate.

15. A structure, part of a structure or article painted with a paint composition according to any one of claims 1 to 13.

16. Use of a thickener system in an aqueous paint composition to provide a self-supporting dimensionally stable paint body comprising
i) from 1 to 6%, preferably from 2 to 5% chelating thickener
ii) from 2 to 8%, preferably from 3 to 5% clay thickener
iii) from 0 to 30%, preferably 5 to 20% clay extender.
wherein the body has a hardness, following overnight hardening in a 250cm³ container, of from 50 to 750g when measured at 23°C +/- 2°C using a Leatherhead Food research Association texture analyser, obtainable from Brookfield Viscometers, equipped with a 4mm diameter stainless steel probe travelling at 1mm s⁻¹ for a total travel of 10mm.

17. Use of a thickener system according to claim 16 wherein the paint body has a melting temperature of at least 60°C.

## Patentansprüche

1. Wässrige Farbzusammensetzung, die zu einer selbsttragenden , formbeständigen Farbsubstanz gebildet werden kann, aufweisend nach Gewicht der Gesamtzusammensetzung
i) von 1 bis 6% chelatbildendes Verdickungsmittel
ii) von 2 bis 8% Ton-Verdickungsmittel und
iii) von 0 bis 30% Ton-Streckmittel
wobei die Substanz eine Härte, nach Härten über Nacht in einem 250 cm³ Behälter, von 50 bis 750 g besitzt, gemessen bei 23°C +/-2°C unter Verwendung eines Leatherhead Food Research Association Texture Analyser, erhältlich von Brookfield Viscometers, ausgestattet mit einer 4 mm Durchmesser Edelstahlsonde, die bei 1 mm s⁻¹ und einem Gesamtweg von 10 mm fährt.

2. Wässrige Farbzusammensetzung nach Anspruch 1, wobei die Farbsubstanz eine Schmelztemperatur von mindestens 60°C hat.

3. Farbzusammensetzung nach Anspruch 1 oder 2, die, wenn sie zu einer selbesttragenden, formbeständigen Farbsubstanz gebildet wurde, eine Härte von mindestens 50 g hat, und die durch Kontaktieren einer exponierten Oberfläche der Substanz mit dem Substrat direkt auf ein Substrat aufgetragen werden kann, und die unter Anwendung von genügend Scherspannung und/oder Schergeschwindigkeit in der Kontaktzone zwischen der Zusammensetzung und dem Substrat die Zusammensetzung fließfähig macht.

4. Farbzusammensetzung nach einem der vorhergehenden Ansprüche und weiterhin aufweisend ein filmbildendes Polymer.

5. Farbzusammensetzung nach einem der vorhergehenden Ansprüche und weiterhin aufweisend von 0,01 bis 30% Ton-Streckmittel.

6. Farbzusammensetzung nach einem der vorhergehenden Ansprüche, wobei das chelatbildende Verdickungsmittel von 2 bis 5% der Gesamtzusammensetzung aufweist.

7. Farbzusammensetzung nach einem der vorhergehenden Ansprüche, wobei das Ton-Verdickungsmittel von 3 bis 5% der Gesamtzusammensetzung aufweist.

8. Farbzusammensetzung nach einem der vorhergehenden Ansprüche, wobei das Ton-Streckmittel von 5 bis 20% der Gesamtzusammensetzung aufweist.

9. Farbzusammensetzung nach einem der vorhergehenden Ansprüche, wobei das chelatbildende Verdickungsmittel ein Alkanolamintitanat-Komplex oder ein Zirkonium-Milchsäure-Komplex ist.

10. Farbzusammensetzung nach einem der vorhergehenden Ansprüche, wobei das Ton-Verdickungsmittel ein synthetischer Hektorit ist.

11. Farbzusammensetzung nach einem der vorhergehenden Ansprüche, die eine Fließgrenze von mindestens 1500 Pa, gemessen bei 25°C, hat.

12. Farbzusammensetzung nach einem der vorhergehenden Ansprüche, die eine hohe Scherviskosität von 0,05 bis 0,5 Pa.s, gemessen bei 10.000 s⁻¹ und 25°C, hat.

13. Farbzusammensetzung nach einem der vorhergehenden Ansprüche, die auch Inhaltsstoffe enthält, die aus der Gruppe ausgewählt sind, die Pigmente, Füllstoffe, Wachse, Streckmittel, rheologische Modifikatoren, Dispergiermittel, Fließhilfsmittel und Biozide aufweist.

14. Verfahren zum Anstreichen unter Verwendung einer Farbzusammensetzung nach einem der vorhergehenden Ansprüche aufweisend das Kontaktieren einer exponierten Oberfläche der Farbsubstanz mit einem zu beschichtenden Substrat und Anwenden von genügend Scherspannung in der Kontaktzone zwischen der Zusammensetzung und dem Substrat, so dass die Fließgrenze der Farbe überschritten wird, wodurch die Beschichtung fließt und eine im Wesentlichen gleichmäßige Deckschicht auf dem Substrat hinterlässt.

15. Konstruktion, Teil einer Konstruktion oder Gegenstand, der mit einer Farbzusammensetzung nach einem der Ansprüche 1 bis 13 angestrichen ist.

16. Verwendung eines Verdickungsmittelsystems in einer wässrigen Farbzusammensetzung, um eine selbsttragende, formbeständige Farbsubstanz bereitzustellen, aufweisend
i) von 1 bis 6%, vorzugsweise von 2 bis 5% chelatbildendes Verdickungsmittel
ii) von 2 bis 8%, vorzugsweise 3 bis 5% Ton-Verdickungsmittel und
iii) von 0 bis 30%, vorzugsweise 5 bis 20% Ton-Streckmittel,
wobei die Substanz eine Härte, nach Härten über Nacht in einem 250 cm³ Behälter, von 50 bis 750 g besitzt, gemessen bei 23°C +/-2°C unter Verwendung eines Leatherhead Food Research Association Texture Analyser, erhältlich von Brookfield Viscometers, ausgestattet mit einer 4 mm Durchmesser Edelstahlsonde, die bei 1 mm s⁻¹ und einem Gesamtweg von 10 mm fährt.

17. Verwendung eines Verdickungsmittelsystems nach Anspruch 16, wobei die Farbsubstanz eine Schmelztemperatur von mindestens 60°C hat.

## Revendications

1. Composition de peinture aqueuse pouvant présenter la forme d'un corps de peinture autoporteur, aux dimensions stables comprenant en poids de la composition totale
i) de 1 à 6% d'épaississant chélatant
ii) de 2 à 8% d'épaississant argileux et
iii) de 0 à 30% de matière de charge argileuse
dans laquelle le corps a une dureté, après durcissement pendant une nuit dans un récipient de 250cm³, allant de 50 à 750 g lorsqu'elle est mesurée à 23°C +/- 2°C en utilisant un analyseur de texture de Leatherhead Food research Association, pouvant être obtenu auprès de Brookfield Viscometers, équipé d'une sonde en acier inoxydable de 4 mm de diamètre se déplaçant à 1 mm s⁻¹ pour un déplacement total de 10mm.

2. Composition de peinture aqueuse selon la revendication 1 dans laquelle le corps de peinture a une température de fusion d'au moins 60°C.

3. Composition de peinture selon la revendication 1 ou 2 lorsqu'elle présente la forme d'un corps de peinture autoporteur aux dimensions stables ayant une dureté d'au moins 50 g et qui peut être appliquée directement à un substrat en entrant en contact avec une surface exposée du corps sur le substrat et qui sous l'application d'une force de cisaillement suffisante et/ ou d'une vitesse de cisaillement suffisante dans la zone de contact entre la composition et le substrat rend la composition fluide.

4. Composition de peinture selon l'une quelconque des revendications précédentes et comprenant en outre un polymère filmogène.

5. Composition de peinture selon l'une quelconque des revendications précédentes et comprenant en outre de 0,01 à 30% de matière de charge argileuse.

6. Composition de peinture selon l'une quelconque des revendications précédentes comprenant de 2 à 5% de l'épaississant chélatant par rapport à la composition totale.

7. Composition de peinture selon l'une quelconque des revendications précédentes comprenant de 3 à 5% de l'épaississant argileux par rapport à la composition totale.

8. Composition de peinture selon l'une quelconque des revendications précédentes comprenant de 5 à 20% de la matière de charge argileuse par rapport à la composition totale.

9. Composition de peinture selon l'une quelconque des revendications précédentes où l'épaississant chélatant est un complexe de titanate d'alcanolamine ou un complexe d'acide lactique et de zirconium.

10. Composition de peinture selon l'une quelconque des revendications précédentes où l'épaississant argileux est une hectorite synthétique.

11. Composition de peinture selon l'une quelconque des revendications précédentes ayant une limite d'écoulement d'au moins 1500 Pa mesurée à 25°C.

12. Composition de peinture selon l'une quelconque des revendications précédentes ayant une viscosité de cisaillement élevée allant de 0,05 à 0,5 Pa.s mesurée à 10000 s⁻¹ et 25°C.

13. Composition de peinture selon l'une quelconque des revendications précédentes contenant également des ingrédients sélectionnés dans le groupe constitué par des pigments, des matières de remplissage, des cires, des matières de charge, des modificateurs rhéologiques, des agents dispersants, des adjuvants d'écoulement et des biocides.

14. Procédé de peinture utilisant une composition de peinture selon l'une quelconque des revendications précédentes comprenant la mise en contact d'une surface exposée du corps de peinture sur un substrat à revêtir et l'application d'une force de cisaillement suffisante dans la zone de contact entre la composition et le substrat de sorte que la limite d'écoulement de la peinture soit dépassée moyennant quoi le revêtement s'écoule pour laisser une couche de revêtement sensiblement uniforme sur le substrat.

15. Structure, partie d'une structure ou d'un article peint(e) avec une composition de peinture selon l'une quelconque des revendications 1 à 13.

16. Utilisation d'un système épaississant dans une composition de peinture aqueuse pour fournir un corps de peinture autoporteur aux dimensions stables comprenant
i) de 1 à 6%, de préférence de 2 à 5% d'épaississant chélatant
ii) de 2 à 8%, de préférence de 3 à 5% d'épaississant argileux
iii) de 0 à 30%, de préférence de 5 à 20% de matière de charge argileuse,
selon laquelle le corps a une dureté, après durcissement pendant une nuit dans un récipient de 250cm³, allant de 50 à 750 g lorsqu'elle est mesurée à 23°C +/- 2°C en utilisant un analyseur de texture de Leatherhead Food research Association, pouvant être obtenu auprès de Brookfield Viscometers, équipé d'une sonde en acier inoxydable de 4 mm de diamètre se déplaçant à 1 mm s⁻¹ pour un déplacement total de 10mm.

17. Utilisation d'un système épaississant selon la revendication 16 dans lequel le corps de peinture a une température de fusion d'au moins 60°C.
